# FASCICULE DE BREVET EUROPEEN

(11) **EP 3 934 934 B1**
(45) Date de publication et mention de la délivrance du brevet: **10.01.2024**
(21) Numéro de dépôt: 20713717.5
(22) Date de dépôt: 25.02.2020
(51) Int. Cl.: B60N 3/02, B62D 25/06, B62D 27/02, B62D 25/02

(54) **STRUCTURE COMPRENANT UN GOUSSET POUR UNE TRAVERSE ARRIÈRE DE PAVILLON DE TOIT INTÉGRANT UN SUPPORT DE POIGNÉE**
STRUKTUR MIT EINER HALTERUNG FÜR EINEN HINTEREN DACHPLATTENQUERTRÄGER, MIT EINEM GRIFFTRÄGER
STRUCTURE COMPRISING A BRACKET FOR A REAR ROOF PANEL CROSS MEMBER INCORPORATING A HANDLE SUPPORT

(30) Priorité: 07.03.2019 FR 1902312
(43) Date de publication de la demande: 12.01.2022
(73) Titulaire: Stellantis Auto SAS, 78300 Poissy (FR)
(72) Inventeur: PROST, Fabien, 25200 MONTBELIARD (FR); LOISEL, Sebastien, 60600 MAIMBEVILLE (FR); TERKI, Chabane, 25200 MONTBELIARD (FR); REY, Loic, 25150 ECOT (FR)
(86) Numéro de dépôt international: PCT/FR2020/050352
(87) Numéro de publication internationale: WO 2020/178502

(56) Documents cités:
- WO-A1-2017/174282
- DE-A1-102009 048 338
- FR-A1- 3 010 035

## Description

### Domaine technique

L'invention a trait au domaine des véhicules automobiles, plus particulièrement à la structure arrière d'un véhicule automobile comprenant un toit ouvrant.

### Technique antérieure

La structure d'un véhicule automobile comprend deux arcs de pavillon entre lesquels s'étend un pavillon de toit. Mais, lorsque le véhicule comprend un toit ouvrant occupant une partie du pavillon de toit, la structure du véhicule est fragilisée. Il est alors nécessaire de rajouter une traverse arrière, positionnée entre les arcs de pavillon. La traverse arrière est rattachée aux arcs de pavillon par des goussets, et permet de rigidifier la structure du véhicule.

Le document de brevet publié FR 3 010 035 A1 divulgue une structure de véhicule automobile avec un pavillon de toit comprenant un toit ouvrant. L'aménagement du toit ouvrant dans le pavillon de toit nécessite la présence d'une traverse avant avec un gousset rattachant ladite traverse à l'arc de pavillon correspondant. Chaque arc de pavillon supporte, en outre, un support de poignée de maintien, intégré au gousset correspondant. Le gousset présente une forme en L, la portion du gousset accueillant le support de poignée étant décalée vers l'arrière de la traverse avant. Le gousset est donc volumineux, complexe à fabriquer et à monter sur le véhicule.

Le document de brevet publié WO 2017/174282 A1 divulgue un gousset pour une traverse arrière de véhicule automobile, la traverse arrière étant avantageusement positionnée à proximité des pieds centraux du véhicule. Le gousset supporte également des orifices de fixation pour une poignée de maintien, ces orifices étant décalés vers l'arrière du véhicule, par rapport à la traverse arrière. De plus, la portion du gousset avec les orifices de fixation est généralement horizontale, rendant ainsi la forme générale du gousset complexe et volumineuse. Ce document décrit aussi une structure de véhicule automobile selon le préambule de la revendication 1.

### Exposé de l'invention

L'invention a pour objectif de pallier au moins un des inconvénients de l'état de la technique susmentionné. Plus particulièrement, l'invention a pour objectif de simplifier la structure et le montage de goussets de traverse arrière et des supports de poignée de maintien sur un véhicule automobile avec toit ouvrant.

L'invention a pour objet une structure de véhicule automobile avec toit ouvrant, ladite structure présentant deux côtés latéraux et comprenant : à chacun des deux côtés latéraux, un arc de pavillon arrière de toit avec une doublure ; une traverse arrière de pavillon de toit s'étendant transversalement entre les deux arcs de pavillon arrière de toit, ladite traverse comprenant deux extrémités ; à chacune des deux extrémités de la traverse, un gousset formant un embouti et reliant ladite extrémité à la doublure correspondante ; et, à au moins un des deux côtés latéraux, un support de poignée de maintien ; remarquable en ce que l'au moins un support de poignée de maintien est formé directement sur le gousset correspondant et comprend deux orifices d'ancrage de ladite poignée, formés dans le gousset correspondant, lesdits orifices d'ancrage étant à l'aplomb de la traverse arrière de pavillon de toit. La structure comprend, en outre, à chacun des deux côtés latéraux, une bande de tôle s'étendant le long de l'arc de pavillon arrière de toit et formant un support latéral du toit ouvrant, chacun desdits supports latéraux étant pris en sandwich entre le gousset correspondant et la traverse arrière de pavillon de toit.

Selon un mode avantageux de l'invention, l'au moins un support de poignée de maintien comprend deux zones de réception de la poignée de maintien et formant les orifices d'ancrages, lesdites zones étant verticales ou inclinées par rapport à un plan vertical d'un angle inférieur à 20°.

Selon un mode avantageux de l'invention, sur chacun de l'au moins un support de poignée de maintien, les deux zones de réception de la poignée de maintien sont surélevées et distantes l'une de l'autre horizontalement.

Selon un mode avantageux de l'invention, chacun des deux goussets est fixé au support latéral du toit ouvrant correspondant et à la traverse arrière de pavillon de toit par des points de soudure par résistance électrique.

Selon un mode avantageux de l'invention, les points de soudure par résistance électrique comprennent des premiers points de soudure formés entre les goussets et les supports latéraux du toit ouvrant et des deuxièmes points de soudure formés entre les supports latéraux du toit ouvrant et la traverse arrière de pavillon de toit.

Selon un mode avantageux de l'invention, au moins un des goussets comprend une portion supérieure de contact avec le support latéral du toit ouvrant correspondant, ladite portion comprenant au moins un ajour d'un diamètre moyen supérieur à 10mm et dans lequel est situé un des deuxièmes points de soudure.

Selon un mode avantageux de l'invention, l'au moins un ajour comprend deux ajours disposés côte-à-côte horizontalement.

Selon un mode avantageux de l'invention, chacun des supports latéraux du toit ouvrant s'étend transversalement vers l'intérieur au-delà du gousset correspondant.

Les mesures de l'invention sont intéressantes en ce qu'elles permettent de simplifier la fabrication et la structure d'un gousset comprenant un support de poignée. La taille et la forme du gousset intégrant le support de poignée de maintien sont optimisées. De plus, les zones de réception de la poignée de maintien, formant les orifices d'ancrage, de par leur verticalité ou quasi verticalité, participent à l'optimisation de la forme du gousset. Le caractère surélevé de ces zones et le fait que ces zones soient distantes l'une de l'autre permet à une portion inférieure du gousset, servant à fixer le gousset à l'arc de pavillon, de former une encoche entre ces zones de réception. Cela augmente la stabilité de la fixation à l'arc de pavillon tout en augmentant la rigidité générale du gousset. La prise en sandwich de la bande de tôle formant le support latéral du toit ouvrant assure une rigidité optimale. Aussi la réalisation de points de soudure par résistance électrique, d'une part entre le support latéral du toit ouvrant et la traverse arrière de pavillon de toit, et d'autre part entre ledit support latéral du toit ouvrant et le gousset, assure une fixation simple et efficace. Les ajours formés dans la portion supérieure du gousset, destinée à contacter le support latéral du toit ouvrant correspondant, sont avantageux pour réaliser les points de soudure entre le support latéral du toit ouvrant en question et la traverse arrière de pavillon de toit.

D'autres caractéristiques et avantages de la présente invention seront mieux compris à l'aide de la description et des dessins.

### Brève description des dessins

[Fig 1] est une vue en perspective de l'arrière d'un véhicule automobile comprenant une structure de véhicule selon l'invention ;
[Fig 2] montre une vue du dessous d'une structure de véhicule automobile selon l'invention, au niveau de la fixation entre un gousset, une traverse arrière et un arc de pavillon arrière.

### Description détaillée

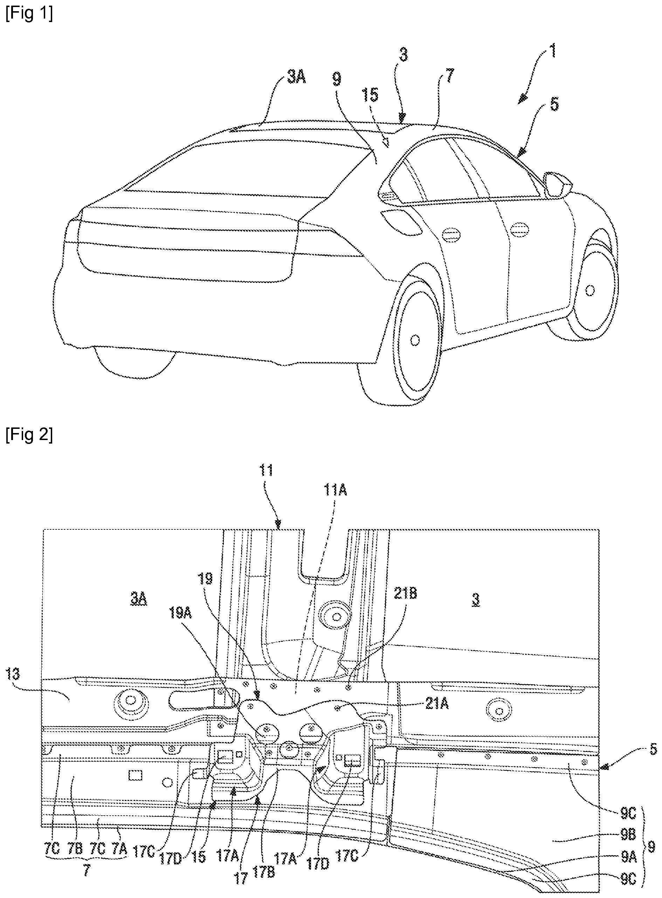

La figure 1 montre une vue de l'arrière d'un véhicule automobile comprenant une structure selon l'invention. La structure du véhicule 1 comprend deux côtés latéraux 5 et un pavillon de toit 3. Chaque côté latéral 5 comprend au moins un arc de pavillon arrière 7 de toit 3, le pavillon de toit 3 étant positionné entre les deux arcs de pavillon 7 des côtés latéraux 5. De plus, le pavillon de toit 3 comprend un toit ouvrant 3A. Le véhicule 1 comprend, en outre, des piliers 9 positionnés à chacun des côtés latéral 5 du véhicule 1, les piliers 9 s'étendant depuis un châssis du véhicule 1 vers le pavillon de toit 3. Plus particulièrement, des piliers arrière 9 s'étendent depuis le châssis vers les arcs de pavillon arrière 7 correspondants. Une traverse arrière de pavillon de toit 3 (non visible sur cette figure), qui s'étend transversalement entre les deux arcs de pavillon arrière 7 de toit 3 du véhicule 1, est également nécessaire, pour rigidifier le pavillon de toit 3 intégrant le toit ouvrant 3A. Un gousset 15 selon l'invention rattache la traverse arrière à chacun des arcs de pavillon arrière 7.

La figure 2 montre une vue de l'intérieur de la structure de véhicule selon l'invention.

L'arc de pavillon arrière 7 de toit 3 du véhicule comprend un profilé externe 7A et une doublure 7B, présentant, chacun, une section transversale en U. Le profilé externe 7A et la doublure 7B sont rattachés ensemble par deux feuillures supérieure et inférieure 7C, en vue de former une poutre creuse. De la même façon, le pilier arrière 9 comprend un profilé externe 9A et une doublure 9B, comprenant, chacun, une section transversale en U, et rattachés ensemble par des feuillures supérieure et inférieure 9C. Le pilier arrière 9 et l'arc de pavillon arrière 7 sont fixés ensemble pour former une partie du côté latéral 5. À proximité des jonctions entre les piliers arrière 9 et les arcs de pavillon arrière 7 est montée la traverse arrière 11 de pavillon de toit 3. La traverse arrière 11 présente deux extrémités latérales 11A supportant, chacune, un gousset 15 selon l'invention, le gousset 15 permettant de relier chaque extrémité 11A de la traverse arrière 11 à la doublure 7B d'arc de pavillon 7 correspondante. À chacun des côtés latéraux 5, entre le gousset 15 et l'extrémité 11A de la traverse arrière 11 correspondante, se trouve une bande de tôle formant un support latéral 13 de toit ouvrant 3A, ce support latéral 13 étant alors pris en sandwich entre le gousset 15 et l'extrémité 11A de la traverse arrière 11 correspondants. Ce support latéral 13 s'étend le long de l'arc de pavillon arrière 7 de toit 3 correspondant, et s'étend transversalement vers l'intérieur au-delà du gousset 15 correspondant.

De manière générale, la structure d'un véhicule automobile comprend un ou des supports de poignée de maintien, situés sur une ou des doublures 7B d'arc de pavillon arrière 7. Dans la présente demande, le support de poignée de maintien est formé directement sur le gousset 15, le gousset 15 formant un embouti. Ainsi, chaque gousset 15 comprend une première portion 17 de fixation à la doublure 7B d'arc de pavillon arrière 7, et une deuxième portion 19 de fixation à la traverse arrière 11.

La première portion 17 de fixation à la doublure 7B d'arc de pavillon arrière 7 présente deux zones de réception 17A de la poignée de maintien (non représentée sur ces figures), ces zones 17A formant des orifices d'ancrage 17D de ladite poignée. Les zones de réception 17A sont avantageusement verticales, ou inclinées par rapport à un plan vertical d'un angle inférieur à 20°. Ces zones de réception 17A sont avantageusement au nombre de deux par gousset 15, elles sont surélevées et distantes l'une de l'autre horizontalement, donc préférentiellement situées à des extrémités dudit gousset 15. Les zones de réception 17A sont, en outre, séparées par une portion centrale 17B de fixation à la doublure 7B d'arc de pavillon arrière 7 sous-jacente. La première portion 17 de fixation du gousset 15 comprend également des pattes de fixation 17C à ladite doublure 7B, positionnées latéralement et vers l'extérieur des zones de réception 17A de la poignée. Avantageusement, les orifices d'ancrage 17D des zones de réception 17A sont de forme parallélépipédique, et au nombre de deux par gousset 15. Les orifices d'ancrage 17D sont à l'aplomb de la traverse arrière 11 de pavillon de toit 3. En outre, les première et deuxième portions (17, 19) sont alignées suivant un axe central du gousset 15, les orifices d'ancrage 17D de la poignée étant situés de part et d'autre dudit axe central.

La deuxième portion 19 du gousset 15 est une portion supérieure de contact 19 avec le support latéral 13 de toit ouvrant 3A correspondant, cette deuxième portion 19 permettant également la fixation à la traverse arrière 11 de pavillon de toit 3. Cette deuxième portion 19 comprend au moins un ajour 19A, préférentiellement deux ajours 19A disposés côte à côte et horizontalement à la deuxième portion 19. Avantageusement, chacun des ajours 19A a un diamètre moyen supérieur à 10mm.

La fixation entre le gousset 15, la traverse arrière 11, le support latéral 13, le pilier arrière 9 et l'arc de pavillon arrière 7 est préférentiellement réalisée par des points de soudure par résistance électrique. Deux types de points de soudure sont particulièrement importants dans la présente demande. Des premiers points de soudure 21A sont formés entre les goussets 15 et les support latéraux 13 de toit ouvrant 3A, et des deuxièmes points de soudure 21B sont formés entre les supports latéraux 13 de toit ouvrant 3A et la traverse arrière 11 de pavillon de toit 3. Avantageusement, ces deuxièmes points de soudure 21B sont retrouvés au niveau des ajours 19A du gousset 15, ces ajours 19A permettant de faciliter la fixation entre le support latéral 13 et la traverse arrière 11 lors du montage de la structure de véhicule.

L'invention se rapporte également à un procédé de montage d'une structure de véhicule automobile selon l'invention, et plus particulièrement le montage d'une structure arrière et latérale de véhicule automobile. Ce procédé est décrit en relation avec les figures 1 et 2.

Dans un premier temps, on fixe par soudure le gousset 15 selon l'invention à la doublure 7B d'arc de pavillon arrière 7 de véhicule automobile 1 correspondante.

Dans un second temps, chaque doublure 7B est rattachée au profilé externe 7A de l'arc de pavillon arrière 7 correspondant, pour former une poutre creuse. Les profilés externes 7A sont auparavant rattachés à la structure du véhicule 1, en particulier aux profilés externes 9A du pilier arrière 9.

Ensuite, chaque support latéral 13 est fixé aux feuillures supérieures (7C, 9C) des pilier arrière 9 et arc de pavillon arrière 7 correspondants, et plus particulièrement à l'arrière de chacun des goussets 15 correspondants. Cette fixation est avantageusement réalisée par des points de soudure par résistance électrique, et, notamment, le rattachement de chaque support latéral 13 de toit ouvrant 3A au gousset 15 correspondant est réalisé par les points de soudure électrique 21A.

Enfin, on fixe la traverse arrière 11 de pavillon de toit 3 à l'arrière des supports latéraux 13 de toit ouvrant 3A par les points de soudure électriques 21B.

## Revendications

1. Structure de véhicule automobile (1) avec toit ouvrant (3A), ladite structure présentant deux côtés latéraux (5) et comprenant :
- à chacun des deux côtés latéraux (5), un arc de pavillon arrière (7) de toit (3) avec une doublure (7B) ;
- une traverse arrière (11) de pavillon de toit (3) s'étendant transversalement entre les deux arcs de pavillon arrière (7) de toit (3), ladite traverse (11) comprenant deux extrémités (11A) ;
- à chacune des deux extrémités (11A) de la traverse (11), un gousset (15) formant un embouti et reliant ladite extrémité (11A) à la doublure (7B) correspondante ; et,
- à au moins un des deux côtés latéraux (5), un support de poignée de maintien formé directement sur le gousset (15) correspondant et comprenant deux orifices d'ancrage (17D) de ladite poignée, formés dans le gousset (15) correspondant, lesdits orifices d'ancrage (17D) étant à l'aplomb de la traverse arrière (11) de pavillon de toit (3), **caractérisée en ce que** ladite structure comprend, en outre, à chacun des deux côtés latéraux (5), une bande de tôle s'étendant le long de l'arc de pavillon arrière (7) de toit (3) et formant un support latéral (13) du toit ouvrant (3A), chacun desdits supports latéraux (13) étant pris en sandwich entre le gousset (15) correspondant et la traverse arrière (11) de pavillon de toit (3).

2. Structure selon la revendication 1, **caractérisée en ce que** l'au moins un support de poignée de maintien comprend deux zones de réception (17A) de la poignée de maintien et formant les orifices d'ancrages (17D), lesdites zones (17A) étant verticales ou inclinées par rapport à un plan vertical d'un angle inférieur à 20°.

3. Structure selon la revendication 2, **caractérisée en ce que** sur chacun de l'au moins un support de poignée de maintien, les deux zones de réception (17A) de la poignée de maintien sont surélevées et distantes l'une de l'autre horizontalement.

4. Structure selon l'une des revendications 1 à 3, **caractérisée en ce que** chacun des deux goussets (15) est fixé au support latéral (13) du toit ouvrant (3A) correspondant et à la traverse arrière (11) de pavillon de toit (3) par des points de soudure par résistance électrique (21A, 21B).

5. Structure selon la revendication 4, **caractérisée en ce que** les points de soudure par résistance électrique (21A, 21B) comprennent des premiers points de soudure (21A) formés entre les goussets (15) et les supports latéraux (13) du toit ouvrant (3A) et des deuxièmes points de soudure (21B) formés entre les supports latéraux (13) du toit ouvrant (3A) et la traverse arrière (11) de pavillon de toit (3).

6. Structure selon la revendication 5, **caractérisée en ce qu'**au moins un des goussets (15) comprend une portion supérieure (19) de contact avec le support latéral (13) du toit ouvrant (3A) correspondant, ladite portion (19) comprenant au moins un ajour (19A) d'un diamètre moyen supérieur à 10mm et dans lequel est situé un des deuxièmes points de soudure (21B).

7. Structure selon la revendication 6, **caractérisée en ce que** l'au moins un ajour (19A) comprend deux ajours (19A) disposés côte-à-côte horizontalement.

8. Structure selon l'une des revendications 1 à 7, **caractérisée en ce que** chacun des supports latéraux (13) du toit ouvrant (3A) s'étend transversalement vers l'intérieur au-delà du gousset (15) correspondant.

## Patentansprüche

1. Kraftfahrzeugstruktur (1) mit einem Schiebedach (3A), wobei die Struktur zwei Seitenseiten (5) aufweist und Folgendes umfasst:
- an beiden Seiten (5) jeweils ein hinterer (3) Dachbogen (7) mit einem Futter (7B);
- eine sich quer zwischen den beiden hinteren (3) Dachbögen (7) erstreckende hintere Quertraverse (11) eines Dachdachs (3), wobei die Quertraverse (11) zwei Enden (11A) aufweist;
- an beiden Enden (11A) des Querträgers (11) jeweils ein Zwickel (15), der eine Ausstanzung bildet und das genannte Ende (11A) mit der entsprechenden Auskleidung (7B) verbindet, und
- an mindestens einer der beiden Seitenseiten (5) eine Haltegriff-Halterung, die unmittelbar an dem entsprechenden Zwickel (15) ausgebildet ist und zwei in dem entsprechenden Zwickel (15) ausgebildete Verankerungsöffnungen (17D) des genannten Griffs aufweist, wobei die genannten Verankerungsöffnungen (17D) senkrecht zur hinteren Quertraverse (11) des Daches (3) liegen, **dadurch gekennzeichnet, dass** die genannte Struktur außerdem an jeder der beiden Seitenseiten (5) einen Blechstreifen aufweist, der sich entlang des hinteren Dachbogens (7) des Daches (3) erstreckt, und einen seitlichen Träger (13) des Schiebedachs (3A) bildend, wobei jeder der seitlichen Träger (13) zwischen dem entsprechenden Zwickel (15) und dem hinteren Querträger (11) des Dachdachs (3) sandwichartig angeordnet ist.

2. Struktur nach Anspruch 1, **dadurch gekennzeichnet, dass** der mindestens eine Haltegriff-Träger zwei Haltegriff-Aufnahmebereiche (17A) aufweist, die die Verankerungsöffnungen (17D) bilden, wobei die Bereiche (17A) vertikal oder geneigt zu einer vertikalen Ebene mit einem Winkel von weniger als 20° sind.

3. Struktur nach Anspruch 2, **dadurch gekennzeichnet, dass** an jedem der mindestens einen Haltegriff-Halterung die beiden Haltegriff-Aufnahmebereiche (17A) erhöht und horizontal voneinander beabstandet sind.

4. Struktur nach einem der Ansprüche 1 bis 3, **dadurch gekennzeichnet, dass** jeder der beiden Zwickel (15) an der seitlichen Halterung (13) des entsprechenden Schiebedachs (3A) und an der hinteren Traverse (11) des Dachdachs (3) durch elektrische Widerstandsschweißpunkte (21A, 21B) befestigt ist.

5. Struktur nach Anspruch 4, **dadurch gekennzeichnet, dass** die elektrischen Widerstandsschweißpunkte (21A, 21B) erste Schweißpunkte (21A), die zwischen den Zwickeln (15) und den seitlichen Trägern (13) des Schiebedachs (3A) ausgebildet sind, und zweite Schweißpunkte (21B), die zwischen den seitlichen Trägern (13) des Schiebedachs (3A) und dem hinteren Querträger (11) des Dachdachs (3) ausgebildet sind, umfassen.

6. Struktur nach Anspruch 5, **dadurch gekennzeichnet, dass** mindestens eine der Zwickel (15) einen oberen Abschnitt (19) aufweist, der mit der Seitenstütze (13) des entsprechenden Schiebedachs (3A) in Kontakt steht, wobei der Abschnitt (19) mindestens eine Öffnung (19A) mit einem mittleren Durchmesser von mehr als 10mm aufweist, und wobei sich eine der zweiten Schweißstellen (21B) befindet.

7. Struktur nach Anspruch 6, **dadurch gekennzeichnet, dass** der mindestens eine Durchbruch (19A) zwei Durchbrüche (19A) umfasst, die horizontal nebeneinander angeordnet sind.

8. Struktur nach einem der Ansprüche 1 bis 7, **dadurch gekennzeichnet, dass** jeder der seitlichen Träger (13) des Schiebedachs (3A) sich quer nach innen über den entsprechenden Zwickel (15) hinaus erstreckt.

## Claims

1. Motor vehicle structure (1) with opening roof (3A), said structure having two lateral sides (5) and comprising:
- on each of the two lateral sides (5), a rear roof (3) arch (7) with a lining (7B);
- a rear roof (3) rail (11) extending transversely between the two rear rooves (3) arches (7) said rail (11) comprising two ends (11A);
- at each of the two ends (11A) of the crosspiece (11), a bracket (15) forming a stamped portion and connecting said end (11A) to the corresponding lining (7B); and,
- on at least one of the two lateral sides (5), a holding handle support formed directly on the corresponding gusset (15) and comprising two anchoring orifices (17D) of said handle, formed in the corresponding gusset (15), said anchoring orifices (17D) being in line with the rear crossmember (11) of the roof (3), **characterized in that** said structure further comprises, at each of the two lateral sides (5), a strip of sheet metal extending along the rear roof arc (7) of roof (3) and forming a lateral support (13) of the sunroof (3A), each of said lateral supports (13) being sandwiched between the corresponding gusset (15) and the rear crossmember (11) of the roof (3).

2. Structure according to claim 1, **characterized in that** the at least one holding-handle support comprises two zones (17A) for receiving the holding-handle and forming the anchoring orifices (17D), the said zones (17A) being vertical or inclined with respect to a vertical plane by an angle of less than 20°.

3. Structure according to claim 2, **characterized in that**, on each of the at least one holding handle support, the two receiving zones (17A) of the holding handle are raised and spaced apart from one another horizontally.

4. Structure according to one of claims 1 to 3, **characterized in that** each of the two gussets (15) is fixed to the lateral support (13) of the corresponding sunroof (3A) and to the rear crossmember (11) of the roof (3) by electrical resistance welding points (21A, 21B).

5. Structure according to claim 4, **characterized in that** the electrical resistance welding points (21A, 21B) comprise first welding points (21A) formed between the gussets (15) and the lateral supports (13) of the sunroof (3A) and second welding points (21B) formed between the lateral supports (13) of the sunroof (3A) and the rear crossmember (11) of the roof (3).

6. Structure according to claim 5, **characterized in that** at least one of the gussets (15) comprises an upper portion (19) for contact with the lateral support (13) of the corresponding sunroof (3A), the said portion (19) comprising at least one aperture (19A) with a mean diameter of greater than 10 mm and in which one of the second welding points (21B) is located.

7. Structure according to claim 6, **characterized in that** the at least one opening (19A) comprises two openings (19A) arranged horizontally side by side.

8. Structure according to one of claims 1 to 7, **characterized in that** each of the lateral supports (13) of the opening roof (3A) extends transversely inwards beyond the corresponding gusset (15).
